(19) Europäisches Patentamt
European Patent Office
Office européen des brevets

(11) **EP 1 750 111 B1**

(12) **EUROPEAN PATENT SPECIFICATION**

(45) Date of publication and mention of the grant of the patent:
**12.03.2008 Bulletin 2008/11**

(51) Int Cl.:
***G01M 15/11*** *(2006.01)*

(21) Application number: **06117056.9**

(22) Date of filing: **12.07.2006**

(54) **Device and method for identifying an engine misfire in an internal combustion engine mounted on a hybrid vehicle**

Vorrichtung und Verfahren zur Fehlzündungserkennung in der Brennkraftmaschine eines Hybridfahrzeugs

Dispositif et procédé pour l'identification de ratés d'allumage du moteur à combustion interne d'un véhicule hybride

(84) Designated Contracting States:
**DE FR**

(30) Priority: **27.07.2005 JP 2005217719**

(43) Date of publication of application:
**07.02.2007 Bulletin 2007/06**

(73) Proprietor: **Toyota Jidosha Kabushiki Kaisha Toyota-shi, Aichi-ken, 471-8571 (JP)**

(72) Inventor: **Yamaguchi, Katsuhiko Toyota-shi Aichi 471-8571 (JP)**

(74) Representative: **TBK-Patent Bavariaring 4-6 80336 München (DE)**

(56) References cited:
**JP-A- 2001 041 097       US-A1- 2003 173 123
US-B1- 6 634 220**

**Description**

**Background of the Invention**

**1. Field of the Invention**

The present invention relates to an engine misfire identification device for an internal combustion engine and a hybrid vehicle equipped with the engine misfire identification device. More specifically the invention pertains to an engine misfire identification device mounted on a hybrid vehicle equipped with an internal combustion engine and a motor, as well as to a hybrid vehicle equipped with the internal combustion engine, the motor, and the engine misfire identification device.

**2. Description of the Prior Art**

One proposed engine misfire identification device cuts off the fuel supply to all of multiple cylinders in an engine for a preset time period during a load operation of the engine and sequentially allows the fuel supply to one of the multiple cylinders to identify a misfired cylinder (see, for example, Japanese Patent Laid-Open Gazette No. 2000-248989). Another proposed engine misfire identification device is mounted on a hybrid vehicle and controls the operation of a motor to minimize a variation in rotation speed of an engine during a load operation of the engine to enhance the accuracy of engine misfire identification (see, for example, Japanese Patent Laid-Open Gazette No. 2001-271695). Still another proposed engine misfire identification device controls the operation of a motor to drive an engine at a preset fixed rotation speed during a stop of a vehicle to reduce a fluctuating factor of engine output and enhance the accuracy of engine misfire identification (see, for example, Japanese Patent Laid-Open Gazette No. 2001-268711).
Finally, JP-A-2001 041097 describes a technique to change a misfire detection pattern after suspension of engine operation in accordance with the operating state of the engine before the suspension.

**Summary of the Invention**

In the general hybrid vehicle, the engine is driven intermittently or is driven in a specific operation range for the enhanced energy efficiency. It is accordingly difficult to perform engine misfire identification at an appropriate frequency. Any of the prior art techniques described above may be adopted for the engine misfire identification. Execution of the engine misfire identification regardless of the driver's operation request of the hybrid vehicle or regardless of the state of the hybrid vehicle (especially the state of charge of a battery) may result in a failed response to the driver's operation request or may worsen the state of the hybrid vehicle.
The engine misfire identification device of the invention for identifying a misfire in an internal combustion engine, the hybrid vehicle equipped with the engine misfire identification device, and the corresponding engine misfire identification method of identifying a misfire in the internal combustion engine thus aim to enhance the frequency of engine misfire identification of the internal combustion engine mounted on the hybrid vehicle. The engine misfire identification device of the invention for identifying a misfire in an internal combustion engine, the hybrid vehicle equipped with the engine misfire identification device, and the corresponding engine misfire identification method of identifying a misfire in the internal combustion engine also aim to perform suitable engine misfire identification of the internal combustion engine according to the state of the hybrid vehicle. The engine misfire identification device of the invention for identifying a misfire in an internal combustion engine, the hybrid vehicle equipped with the engine misfire identification device, and the corresponding engine misfire identification method of identifying a misfire in the internal combustion engine further aim to perform engine misfire identification in a wide operation range of the internal combustion engine.
In order to attain at least part of the above and the other related objects, the engine misfire identification device of the invention for identifying a misfire in an internal combustion engine, the hybrid vehicle equipped with the engine misfire identification device, and the corresponding engine misfire identification method of identifying a misfire in the internal combustion engine have the configurations depicted in claims 1, 6, and 8 respectively and discussed below.
The present invention is directed to an engine misfire identification device to identify a misfire in an internal combustion engine mounted on a hybrid vehicle. The hybrid vehicle includes: an internal combustion engine; a first motor that is used for motoring the internal combustion engine and for power generation with output power of the internal combustion engine; a second motor that has power output capability of outputting a driving power, and an accumulator unit that receives and transmits electric power from and to the first motor and the second motor. The engine misfire identification device includes: a state detection module that detects at least one of a motoring or a load operation state of said engine; an engine misfire identification pattern specification module that, when an instruction of engine misfire identification is given, specifies an executable engine misfire identification pattern based on the instruction of engine misfire identification and the detected state of said engine; and an engine misfire identification module that performs engine misfire identification of the internal combustion engine according to the specified engine misfire identification pattern.

When an instruction of engine misfire identification is given, the engine misfire identification device of the invention specifies the executable engine misfire identification pattern based on the given instruction of engine misfire identification and the state of the hybrid vehicle. The engine misfire identification device then performs engine misfire identification of the internal combustion engine according to the specified engine misfire identification pattern. The engine misfire identification for the internal combustion engine is thus performed according to the engine misfire identification pattern specified based on the state of the vehicle and based on the given instruction of engine misfire identification. This arrangement enables engine misfire identification in a wide operation range of the internal combustion engine, while enhancing the frequency of engine misfire identification for the internal combustion engine.

In one preferable application of the engine misfire identification device of the invention, the instruction of engine misfire identification includes multiple different instructions of engine misfire identification caused by multiple different factors. The engine misfire identification pattern specification module specifies the engine misfire identification pattern based on a factor causing one of the multiple instructions of engine misfire identification. The engine misfire identification for the internal combustion engine is thus performed according to the engine misfire identification pattern specified based on the factor causing one of the multiple instructions of engine misfire identification. The multiple different instructions of engine misfire identification may include at least one of an instruction caused by elapse of at least a preset time period since a last engine misfire identification, an instruction caused by a drive of at least a preset distance since the last engine misfire identification, an instruction caused by system activation of the hybrid vehicle, an instruction caused by requirement for operation of the internal combustion engine, and an instruction caused by an operator's preset engine misfire identification operation.

In one preferable embodiment of the engine misfire identification device of the invention, the state detection module detects a charge-requirement state that requires charging the accumulator unit. In response to detection of the charge-requirement state of the accumulator unit by the state detection module, the engine misfire identification pattern specification module sets an engine misfire identification pattern in a specific range with preference to charging the accumulator unit. This arrangement gives preference to the charge state of the accumulator unit and thus effectively prevents overcharge or over-discharge of the accumulator unit.

In another preferable embodiment of the engine misfire identification device of the invention, the state detection module measures a vehicle speed of the hybrid vehicle. The engine misfire identification pattern specification module sets an operation range of the internal combustion engine according to the measured vehicle speed and specifies the engine misfire identification pattern in the set operation range. This arrangement ensures the engine misfire identification in the suitable operation range of the internal combustion engine corresponding to the vehicle speed and thus effectively prevents the driver or any passenger on the hybrid vehicle from feeling uncomfortable due to the engine misfire identification in the unsuitable operation range of the internal combustion engine against the vehicle speed.

In still another preferable embodiment of the engine misfire identification device of the invention, the state detection module detects an operating state of the internal combustion engine. In response to detection of a load operation state of the internal combustion engine by the state detection module, the engine misfire identification pattern specification module sets an engine misfire identification pattern with stop of fuel supply to one of multiple cylinders in the internal combustion engine. In response to detection of a motoring state of the internal combustion engine with no fuel supply, the engine misfire identification pattern specification module sets an engine misfire identification pattern with fuel supply to and ignition in one of the multiple cylinders in the internal combustion engine. This arrangement effectively avoids unnecessary operations of the internal combustion engine.

The present invention is directed to a hybrid vehicle including: the internal combustion engine; a first motor that is used for motoring the internal combustion engine and for power generation with output power of the internal combustion engine; a second motor that has power output capability of outputting a driving power, an accumulator unit that receives and transmits electric power from and to the first motor and the second motor, a state detection module that detects at least one of a motoring or a load operation state of said engine; an engine misfire identification pattern specification module that, when an instruction of engine misfire identification is given, specifies an executable engine misfire identification pattern based on the instruction of engine misfire identification and the detected state of said hybrid vehicle; and an engine misfire identification module that performs engine misfire identification of the internal combustion engine according to the specified engine misfire identification pattern.

When an instruction of engine misfire identification is given, the hybrid vehicle of the invention specifies the executable engine misfire identification pattern based on the given instruction of engine misfire identification and the state of the engine. The engine misfire identification device then performs engine misfire identification of the internal combustion engine according to the specified engine misfire identification pattern. The engine misfire identification for the internal combustion engine is thus performed according to the engine misfire identification pattern specified based on the state of the engine and based on the given instruction of engine misfire identification. This arrangement enables engine misfire identification in a wide operation range of the internal combustion engine, while enhancing the frequency of engine misfire identification for the internal combustion engine.

In one preferable application of the hybrid vehicle of the invention, the instruction of engine misfire identification includes multiple different instructions of engine misfire identification caused by multiple different factors, and said engine misfire identification pattern specification module specifies the engine misfire identification pattern based on a factor causing one of the multiple instructions of engine misfire identification. The multiple different instructions of engine misfire identification include at least one of an instruction caused by elapse of at least a preset time period since a last engine misfire identification, an instruction caused by a drive of at least a preset distance since the last engine misfire identification, an instruction caused by system activation of said hybrid vehicle, an instruction caused by requirement for operation of the internal combustion engine, and an instruction caused by an operator's preset engine misfire identification operation.

In one preferable application of the hybrid vehicle of the invention, said state detection module detects a charge-requirement state that requires charging the accumulator unit, and in response to detection of the charge-requirement state of the accumulator unit by said state detection module, said engine misfire identification pattern specification module sets an engine misfire identification pattern in a specific range with preference to charging the accumulator unit. In another preferable application of the hybrid vehicle of the invention, said state detection module measures a vehicle speed of said hybrid vehicle, and said engine misfire identification pattern specification module sets an operation range of the internal combustion engine according to the measured vehicle speed and specifies the engine misfire identification pattern in the set operation range. In another preferable application of the hybrid vehicle of the invention, said state detection module detects an operating state of the internal combustion engine, and in response to detection of a load operation state of the internal combustion engine by said state detection module, said engine misfire identification pattern specification module sets an engine misfire identification pattern with stop of fuel supply to one of multiple cylinders in the internal combustion engine, in response to detection of a motoring state of the internal combustion engine with no fuel supply, said engine misfire identification pattern specification module setting an engine misfire identification pattern with fuel supply to and ignition in one of the multiple cylinders in the internal combustion engine.

The hybrid vehicle of the invention further includes: a three shaft-type power input output module that is linked to three shafts, an output shaft of the internal combustion engine, a driveshaft linked with an axle of said hybrid vehicle, and a rotating shaft of the first motor, and inputs and outputs power from and to a residual one shaft based on powers input from and output to any two shafts among the three shafts.

The present invention is directed to an engine misfire identification method of identifying a misfire in an internal combustion engine mounted on a hybrid vehicle. The hybrid vehicle includes: the internal combustion engine; a first motor that is used for motoring the internal combustion engine and for power generation with output power of the internal combustion engine; a second motor that has power output capability of outputting a driving power, and an accumulator unit that receives and transmits electric power from and to the first motor and the second motor. The engine misfire identification method includes the steps of: when an instruction of engine misfire identification is given, specifying an executable engine misfire identification pattern based on the instruction of engine misfire identification and at least one of a motoring or a load operation state of said engine; and performing engine misfire identification of the internal combustion engine according to the specified engine misfire identification pattern.

The engine misfire identification method of identifying a misfire in an internal combustion engine of the invention, when an instruction of engine misfire identification is given, the engine misfire identification device of the invention specifies the executable engine misfire identification pattern based on the given instruction of engine misfire identification and the state of the engine. The engine misfire identification device then performs engine misfire identification of the internal combustion engine according to the specified engine misfire identification pattern. The engine misfire identification for the internal combustion engine is thus performed according to the engine misfire identification pattern specified based on the state of the engine and based on the given instruction of engine misfire identification. This arrangement enables engine misfire identification in a wide operation range of the internal combustion engine, while enhancing the frequency of engine misfire identification for the internal combustion engine.

**Brief Description of the Drawings**

Fig. 1 schematically illustrates the configuration of a hybrid vehicle equipped in one embodiment of the invention;
Fig. 2 schematically shows the structure of an engine mounted on the hybrid vehicle of the embodiment;
Fig. 3 is a flowchart showing an engine misfire identification instruction routine executed by a hybrid electronic control unit included in the hybrid vehicle of the embodiment;
Fig. 4 is a flowchart showing an engine misfire identification routine executed by an engine ECU included in the hybrid vehicle of the embodiment;
Fig. 5 is a flowchart showing an engine misfire identification drive control routine executed by the hybrid electronic control unit;

Fig. 6 shows one example of a torque demand setting map;

Fig. 7 is an alignment chart showing torque-rotation speed dynamics of respective rotational elements of a power distribution integration mechanism included in the hybrid vehicle of the embodiment;

Fig. 8 schematically illustrates the configuration of another hybrid vehicle in one modified example; and

Fig. 9 schematically illustrates the configuration of still another hybrid vehicle in another modified example.

Description of the Preferred Embodiments

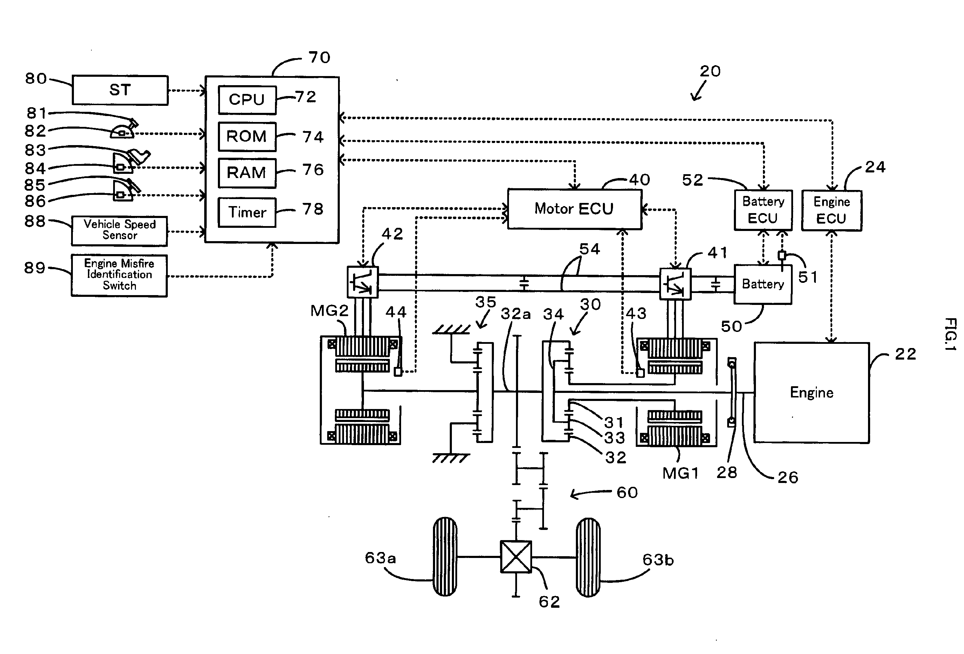

One mode of carrying out the invention is discussed below as a preferred embodiment. Fig. 1 schematically illustrates the construction of a hybrid vehicle 20 with a power output apparatus mounted thereon in one embodiment of the invention. As illustrated, the hybrid vehicle 20 of the embodiment includes an engine 22, a three shaft-type power distribution integration mechanism 30 that is linked with a crankshaft 26 functioning as an output shaft of the engine 22 via a damper 28, a motor MG1 that is linked with the power distribution integration mechanism 30 and is capable of generating electric power, a reduction gear 35 that is attached to a ring gear shaft 32a functioning as a drive shaft connected with the power distribution integration mechanism 30, another motor MG2 that is linked with the reduction gear 35, and a hybrid electronic control unit 70 that controls the whole power output apparatus.

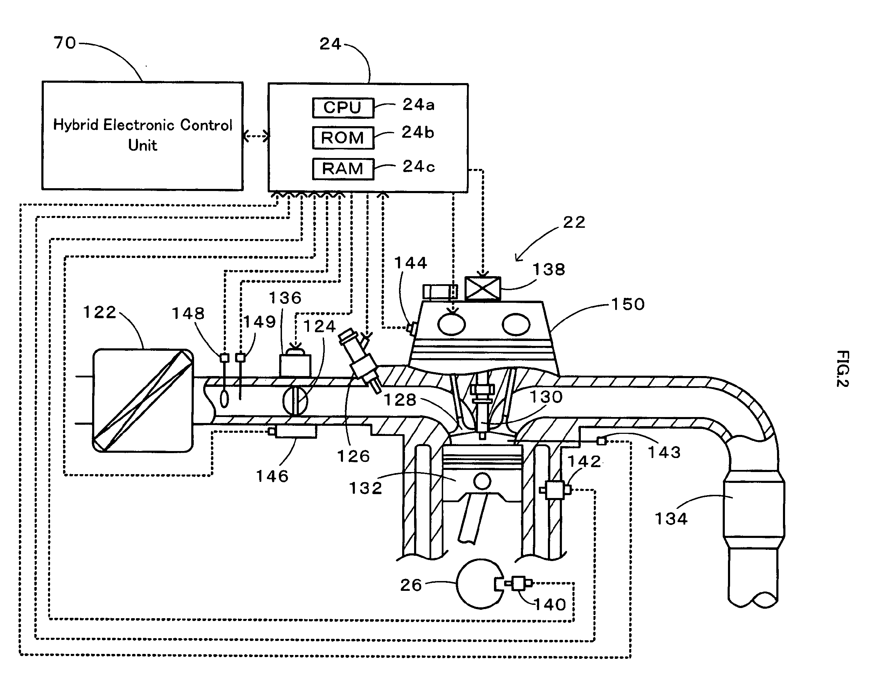

The engine 22 is an internal combustion engine that consumes a hydrocarbon fuel, such as gasoline or light oil, to output power. As shown in Fig. 2, the air cleaned by an air cleaner 122 and taken in via a throttle valve 124 is mixed with the atomized fuel injected by a fuel injection valve 126 to the air-fuel mixture. The air-fuel mixture is introduced into a combustion chamber via an intake valve 128. The introduced air-fuel mixture is ignited with spark made by a spark plug 130 to be explosively combusted. The reciprocating motions of a piston 132 by the combustion energy are converted into rotational motions of a crankshaft 26. The exhaust from the engine 22 goes through a catalytic conversion unit 134 (filled with three-way catalyst) to convert toxic components included in the exhaust, that is, carbon monoxide (CO), hydrocarbons (HC), and nitrogen oxides (NOx), into harmless components, and is discharged to the outside air.

The engine 22 is under control of an engine electronic control unit 24 (hereafter referred to as engine ECU 24). The engine ECU 24 is constructed as a microprocessor including a CPU 24a, a ROM 24b that stores processing programs, a RAM 24c that temporarily stores data, input and output ports (not shown), and a communication port (not shown). The engine ECU 24 receives, via its input port, diverse signals from various sensors that measure and detect the operating conditions of the engine 22. The signals input into the engine ECU 24 include a crank position from a crank position sensor 140 detected as the rotational position of the crankshaft 26, a cooling water temperature from a water temperature sensor 142 measured as the temperature of cooling water in the engine 22, an in-cylinder pressure Pin from a pressure sensor 143 located in the combustion chamber, a cam position from a cam position sensor 144 detected as the rotational position of a camshaft driven to open and close the intake valve 128 and an exhaust valve for gas intake and exhaust into and from the combustion chamber, a throttle valve position from a throttle valve position sensor 146 detected as the opening or position of the throttle valve 124, an air flow meter signal AF from an air flow meter 148 located in an air intake conduit, and an intake air temperature from a temperature sensor 149 located in the air intake conduit. The engine ECU 24 outputs, via its output port, diverse control signals and driving signals to drive and control the engine 22. The signals output from the engine ECU 24 include driving signals to the fuel injection valve 126, driving signals to a throttle valve motor 136 for regulating the position of the throttle valve 124, control signals to an ignition coil 138 integrated with an igniter, and control signals to a variable valve timing mechanism 150 to vary the open and close timings of the intake valve 128. The engine ECU 24 establishes communication with the hybrid electronic control unit 70 to drive and control the engine 22 in response to control signals received from the hybrid electronic control unit 70 and to output data regarding the operating conditions of the engine 22 to the hybrid electronic control unit 70 according to the requirements.

The power distribution and integration mechanism 30 has a sun gear 31 that is an external gear, a ring gear 32 that is an internal gear and is arranged concentrically with the sun gear 31, multiple pinion gears 33 that engage with the sun gear 31 and with the ring gear 32, and a carrier 34 that holds the multiple pinion gears 33 in such a manner as to allow free revolution thereof and free rotation thereof on the respective axes. Namely the power distribution and integration mechanism 30 is constructed as a planetary gear mechanism that allows for differential motions of the sun gear 31, the ring gear 32, and the carrier 34 as rotational elements. The carrier 34, the sun gear 31, and the ring gear 32 in the power distribution and integration mechanism 30 are respectively coupled with the crankshaft 26 of the engine 22, the motor MG1, and the reduction gear 35 via ring gear shaft 32a. While the motor MG1 functions as a generator, the power output from the engine 22 and input through the carrier 34 is distributed into the sun gear 31 and the ring gear 32 according to the gear ratio. While the motor MG1 functions as a motor, on the other hand, the power output from the engine 22 and input through the carrier 34 is combined with the power output from the motor MG1 and input through the sun gear 31 and the composite power is output to the ring gear 32. The power output to the ring gear 32 is thus finally transmitted to the driving wheels 63a and 63b via the gear mechanism 60, and the differential gear 62 from ring gear shaft 32a.

Both the motors MG1 and MG2 are known synchronous motor generators that are driven as a generator and as a motor. The motors MG1 and MG2 transmit electric power to and from a battery 50 via inverters 41 and 42. Power lines 54 that connect the inverters 41 and 42 with the battery 50 are constructed as a positive electrode bus line and a negative electrode bus line shared by the inverters 41 and 42. This arrangement enables the electric power generated by one of the motors MG1 and MG2 to be consumed by the other motor. The battery 50 is charged with a surplus of the electric power generated by the motor MG1 or MG2 and is discharged to supplement an insufficiency of the electric power. When the power balance is attained between the motors MG1 and MG2, the battery 50 is neither charged nor discharged. Operations of both the motors MG1 and MG2 are controlled by a motor electronic control unit (hereafter referred to as motor ECU) 40. The motor ECU 40 receives diverse signals required for controlling the operations of the motors MG1 and MG2, for example, signals from rotational position detection sensors 43 and 44 that detect the rotational positions of rotors in the motors MG1 and MG2 and phase currents applied to the motors MG1 and MG2 and measured by current sensors (not shown). The motor ECU 40 outputs switching control signals to the inverters 41 and 42. The motor ECU 40 communicates with the hybrid electronic control unit 70 to control operations of the motors MG1 and MG2 in response to control signals transmitted from the hybrid electronic control unit 70 while outputting data relating to the operating conditions of the motors MG1 and MG2 to the hybrid electronic control unit 70 according to the requirements.

The battery 50 is under control of a battery electronic control unit (hereafter referred to as battery ECU) 52. The battery ECU 52 receives diverse signals required for control of the battery 50, for example, an inter-terminal voltage measured by a voltage sensor (not shown) disposed between terminals of the battery 50, a charge-discharge current measured by a current sensor (not shown) attached to the power line 54 connected with the output terminal of the battery 50, and a battery temperature Tb measured by a temperature sensor 51 attached to the battery 50. The battery ECU 52 outputs data relating to the state of the battery 50 to the hybrid electronic control unit 70 via communication according to the requirements. The battery ECU 52 calculates a state of charge (SOC) of the battery 50, based on the accumulated charge-discharge current measured by the current sensor, for control of the battery 50.

The hybrid electronic control unit 70 is constructed as a microprocessor including a CPU 72, a ROM 74 that stores processing programs, a RAM 76 that temporarily stores data, a timer 78 that counts time, and a non-illustrated input-output port, and a non-illustrated communication port. The hybrid electronic control unit 70 receives various inputs via the input port: an ignition signal from an ignition switch 80, a gearshift position SP from a gearshift position sensor 82 that detects the current position of a gearshift lever 81, an accelerator opening Acc from an accelerator pedal position sensor 84 that measures a step-on amount of an accelerator pedal 83, a brake pedal position BP from a brake pedal position sensor 86 that measures a step-on amount of a brake pedal 85, a vehicle speed V from a vehicle speed sensor 88, and the on-off condition of the engine misfire identification switch SWj corresponding to the driver's on-off operation of the engine misfire identification switch 89 that performs engine misfire identification for the purpose of maintenance. The hybrid electronic control unit 70 communicates with the engine ECU 24, the motor ECU 40, and the battery ECU 52 via the communication port to transmit diverse control signals and data to and from the engine ECU 24, the motor ECU 40, and the battery ECU 52, as mentioned previously.

The hybrid vehicle 20 of the embodiment thus constructed calculates a torque demand to be output to the ring gear shaft 32a functioning as the drive shaft, based on observed values of a vehicle speed V and an accelerator opening Acc, which corresponds to a driver's step-on amount of an accelerator pedal 83. The engine 22 and the motors MG1 and MG2 are subjected to operation control to output a required level of power corresponding to the calculated torque demand to the ring gear shaft 32a. The operation control of the engine 22 and the motors MG1 and MG2 selectively effectuates one of a torque conversion drive mode, a charge-discharge drive mode, and a motor drive mode. The torque conversion drive mode controls the operations of the engine 22 to output a quantity of power equivalent to the required level of power, while driving and controlling the motors MG1 and MG2 to cause all the power output from the engine 22 to be subjected to torque conversion by means of the power distribution integration mechanism 30 and the motors MG1 and MG2 and output to the ring gear shaft 32a. The charge-discharge drive mode controls the operations of the engine 22 to output a quantity of power equivalent to the sum of the required level of power and a quantity of electric power consumed by charging the battery 50 or supplied by discharging the battery 50, while driving and controlling the motors MG1 and MG2 to cause all or part of the power output from the engine 22 equivalent to the required level of power to be subjected to torque conversion by means of the power distribution integration mechanism 30 and the motors MG1 and MG2 and output to the ring gear shaft 32a, simultaneously with charge or discharge of the battery 50. The motor drive mode stops the operations of the engine 22 and drives and controls the motor MG2 to output a quantity of power equivalent to the required level of power to the ring gear shaft 32a.

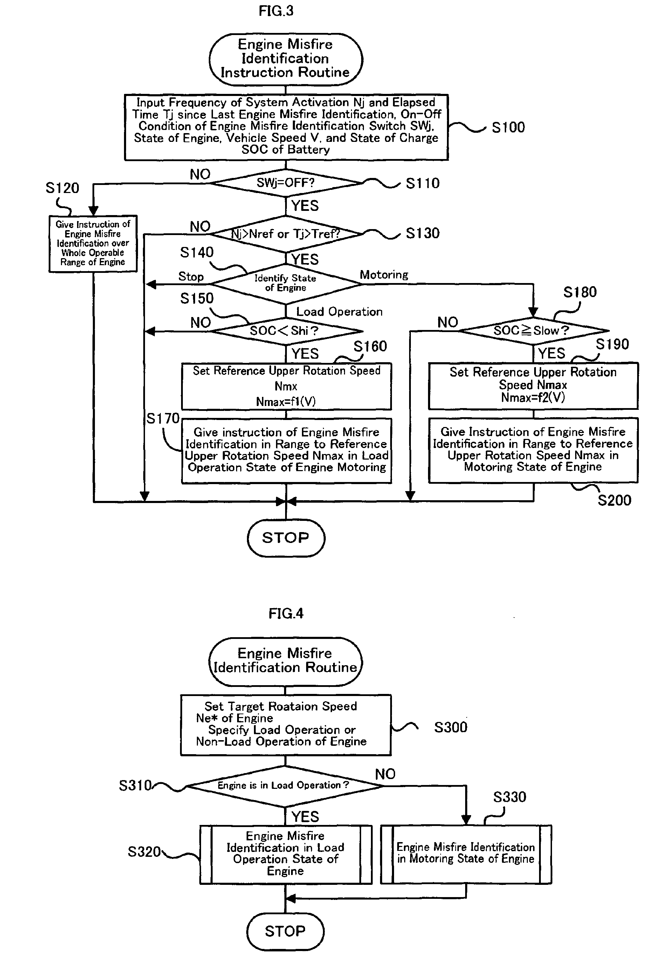

The description regards an engine misfire identification process to identify a misfire in the engine 22 mounted on the hybrid vehicle 20. Fig. 3 is a flowchart showing an engine misfire identification instruction routine executed by the hybrid electronic control unit 70. This instruction routine is triggered by system activation of the hybrid vehicle 20 or by the driver's operation of an engine misfire identification switch 89 to turn on an engine misfire identification switch SWj and is further executed repeatedly at preset time intervals (for example, at every several hours).

In the engine misfire identification instruction routine of Fig. 3, the CPU 72 of the hybrid electronic control unit 70 first inputs various data required for instruction of engine misfire identification, that is, a frequency of system activation Nj of the hybrid vehicle 20 since the last engine misfire identification, an elapsed time Tj since the last engine misfire identification, the on-off condition of the engine misfire identification switch SWj corresponding to the driver's on-off operation of the engine misfire identification switch 89, the state of the engine 22, the vehicle speed V from the vehicle speed sensor 88, and the state of charge SOC of the battery 50 (step S100). The frequency of system activation Nj since the last engine misfire identification and the elapsed time Tj since the last engine misfire identification are entered, for example, by reading the last count of the frequency of system activation Nj and the count of the elapsed time Tj on a timer 78 from the storage of the RAM 76. The state of the engine 22 is defined by entries of the operation or non-operation of the engine 22 and the loading state of the engine 22. The state of charge SOC of the battery 50 is computed from the accumulated charge-discharge current of the battery 50 and is received from the battery ECU 52 by communication.

After the data input, the CPU 72 specifies whether the engine misfire identification switch SWj is off or on (step S110). In response to the on condition of the engine misfire identification switch SWj (step S110: No), there is a requirement of engine misfire identification for the purpose of maintenance. The CPU 72 thus gives the engine ECU 24 an instruction of engine misfire identification across the whole operable range of the engine 22 in the hybrid vehicle 20 (step S120). The CPU 72 then exits from this engine misfire identification instruction routine of Fig. 3. In this state, the hybrid vehicle 20 does not run but stops. The thorough engine misfire identification is accordingly performed for the purpose of maintenance over the whole operable range of the engine 22 with a sequential variation in drive point of the engine 22. In this embodiment, the engine misfire identification for the purpose of maintenance is referred to as maintenance-based engine misfire identification pattern.

In response to the off condition of the engine misfire identification switch SWj (step S110: Yes), on the other hand, the CPU 72 makes a comparison between the frequency of system activation Nj from the last engine misfire identification and a preset reference number Nref and a comparison between the elapsed time Tj since the last engine misfire identification and a preset reference time Tref (step S130). When the frequency of system activation Nj is not greater than the preset reference number Nref and when the elapsed time Tj is not longer than the preset reference time Tref (step S130: No), there is no requirement of engine misfire identification. The CPU 72 thus immediately terminates this engine misfire identification instruction routine of Fig. 3. When the frequency of system activation Nj is greater than the preset reference number Nref or when the elapsed time Tj is longer than the preset reference time Tref (step S130: Yes), on the other hand, there is a requirement of engine misfire identification. The CPU 72 accordingly identifies the state of the engine 22 (step S140). In a stop state of the engine 22 (step S140), the CPU 72 specifies no urgent need of the immediate restart of the engine 22 for engine misfire identification and thus terminates the engine misfire identification instruction routine of Fig. 3.

In a load operation state of the engine 22 (step S140), the state of charge SOC of the battery 50 is compared with a preset upper charge level Shi (step S150). When the state of charge SOC of the battery 50 is not less than the preset upper charge level Shi (step S150: No), the engine misfire identification may cause overcharge of the battery 50. The CPU 72 accordingly specifies no requirement of engine misfire identification and exits from this engine misfire identification instruction routine of Fig. 3. When the state of charge SOC of the battery 50 is less than the preset upper charge level Shi (step S150: Yes), on the other hand, the CPU 72 specifies requirement of engine misfire identification and sets a reference upper rotation speed Nmax of the engine 22 based on the vehicle speed V (step S160). The CPU 72 then gives the engine ECU 24 an instruction of engine misfire identification in a range to the reference upper rotation speed Nmax in the load operation state of the engine 22 (step S170) and exits from this engine misfire identification instruction routine of Fig. 3. The reference upper rotation speed Nmax represents a maximum rotation speed of the engine 22 allowed for engine misfire identification and is set to a greater value with an increase in vehicle speed V. Such setting is because the engine misfire identification in the operation of the engine 22 at a higher rotation speed than the normal rotation speed against the vehicle speed may cause the driver to feel something is wrong. In this embodiment, the engine misfire identification in the range to the reference upper rotation speed Nmax in the load operation state of the engine 22 is referred to as load-operation-state engine misfire identification pattern.

In a motoring state of the engine 22 (step S140), the state of charge SOC of the battery 50 is compared with a preset lower charge level Slow (step S180). When the state of charge SOC of the battery 50 is less than the preset lower charge level Slow (step S180: No), the engine misfire identification may cause over-discharge of the battery 50. The CPU 72 accordingly specifies no requirement of engine misfire identification and exits from this engine misfire identification instruction routine of Fig. 3. When the state of charge SOC of the battery 50 is not less than the preset lower charge level Slow (step S180: Yes), on the other hand, the CPU 72 specifies requirement of engine misfire identification and sets the reference upper rotation speed Nmax of the engine 22 based on the vehicle speed V (step S190) . The CPU 72 then gives the engine ECU 24 an instruction of engine misfire identification in a range to the reference upper rotation speed Nmax in the motoring state of the engine 22 (step S200) and exits from this engine misfire identification instruction routine of Fig. 3. The reference upper rotation speed Nmax in the motoring state of the engine 22 is set to a smaller value than the reference upper rotation speed Nmax in the load operation state of the engine 22. Such setting is because the high rotation speed in the motoring state of the engine 22 may cause the driver to feel uncomfortable.

In this embodiment, the engine misfire identification in the range to the reference upper rotation speed Nmax in the motoring state of the engine 22 is referred to as motoring-state engine misfire identification pattern.

The engine ECU 24 receives the instruction of engine misfire identification given by the hybrid electronic control unit 70 according to the engine misfire identification instruction routine of Fig. 3 and executes an engine misfire identification routine shown in the flowchart of Fig. 4. In the engine misfire identification routine of Fig. 4, the CPU 24a of the engine ECU 24 sets a target rotation speed Ne* of the engine 22 and specifies load operation or non-load operation of the engine 22 (step S300). The target rotation speed Ne* of the engine 22 is set as multiple different rotation speeds selected from the whole operable range of the engine 22 in the hybrid vehicle 20 in the maintenance-based engine misfire identification pattern. The target rotation speed Ne* is set as at least one rotation speed selected from the range to the reference upper rotation speed Nmax in the load-operation-state engine misfire identification pattern or in the motoring-state engine misfire identification pattern.

According to the specification of the load operation or non-load operation of the engine 22 (step S310), the CPU 24a performs engine misfire identification in the load operation state of the engine 22 (step S320) or engine misfire identification in the motoring state of the engine 22 (step S330). The engine misfire identification routine is then terminated. The engine misfire identification in the load operation state of the engine 22 is based on a variation in rotation speed (rotation change) of the crankshaft 26, which is computed from the crank position detected by the crank position sensor 140 attached to the crankshaft 26 when the fuel supply is sequentially cut off to one of the multiple cylinders in the operation of the engine 22 at the target rotation speed Ne*. The engine misfire identification in the motoring state of the engine 22 is based on a rotation change of the crankshaft 26 when fuel injection and ignition are performed sequentially with regard to one of the multiple cylinders in the motoring state of the engine 22 at the target rotation speed Ne*. When there are multiple different target rotation speeds Ne*, the engine misfire identification in the load operation state of the engine 22 or the engine misfire identification in the motoring state of the engine 22 is repeated with regard to all the target rotation speeds Ne*. The engine misfire identification process is not characteristic of the present invention and is thus not specifically described in detail here.

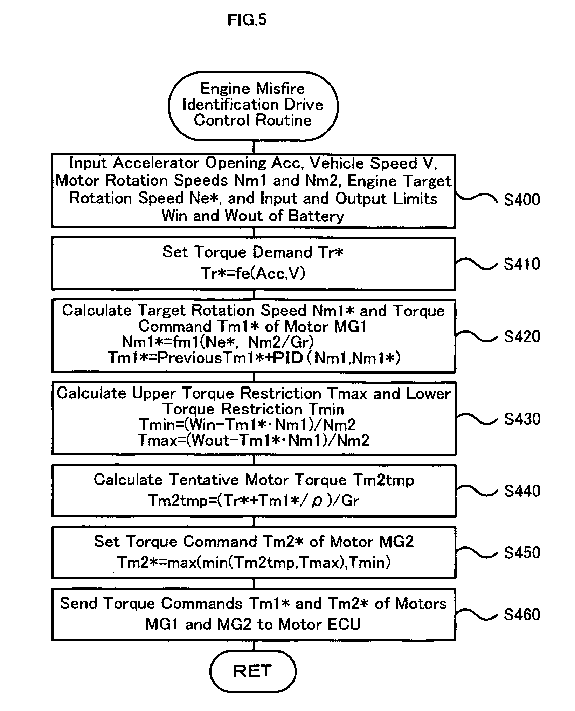

The hybrid vehicle 20 is under drive control during engine misfire identification in the load-operation-state engine misfire identification pattern or in the motoring-state engine misfire identification pattern. Fig. 5 is an engine misfire identification drive control routine executed by the hybrid electronic control unit 70 during engine misfire identification. This drive control routine is repeatedly executed at preset time intervals, for example, at every several hours.

In the engine misfire identification drive control routine of Fig. 5, the CPU 72 of the hybrid electronic control unit 70 first inputs various data required for control, that is, the accelerator opening Acc from the accelerator pedal position sensor 84, the vehicle speed V from the vehicle speed sensor 88, rotation speeds Nm1 and Nm2 of the motors MG1 and MG2, the target rotation speed Ne* of the engine 22, and an input limit Win and an output limit Wout of the battery 50 (step S400). The target rotation speed Ne* of the engine 22 is that used in the engine misfire identification in the load operation state of the engine 22 at step S320 or in the engine misfire identification in the motoring state of the engine 22 at step S330 in the engine misfire identification routine of Fig. 4 and is received from the engine ECU 24 by communication. The rotation speeds Nm1 and Nm2 of the motors MG1 and MG2 are computed from the rotational positions of the respective rotors in the motors MG1 and MG2 detected by the rotational position detection sensors 43 and 44 and are received from the motor ECU 40 by communication. The input limit Win and the output limit Wout of the battery 50 are set based on the battery temperature Tb of the battery 50 measured by the temperature sensor 51 and the state of charge SOC of the battery 50 and are received from the battery ECU 52 by communication.

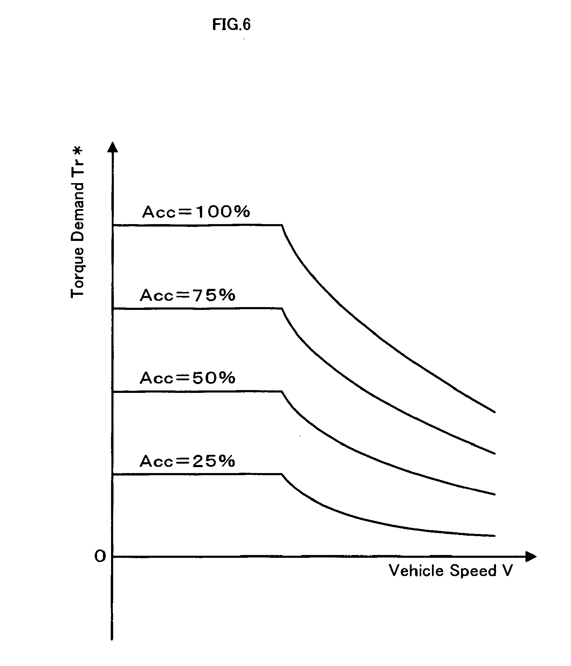

After the data input, the CPU 72 sets a torque demand Tr* to be output to the ring gear shaft 32a or the drive shaft linked to the drive wheels 63a and 63b as a required torque for the hybrid vehicle 20, based on the input accelerator opening Acc and the input vehicle speed V (step S410). A concrete procedure of setting the torque demand Tr* in this embodiment stores in advance variations in torque demand Tr* against the accelerator opening Acc and the vehicle speed V as a torque demand setting map in the ROM 74 and reads the torque demand Tr* corresponding to the given accelerator opening Acc and the given vehicle speed V from this torque demand setting map. One example of the torque demand setting map is shown in Fig. 6.

The CPU 72 calculates a target rotation speed Nm1* of the motor MG1 from the input target rotation speed Ne* of the engine 22, the rotation speed Nr (= Nm2/Gr) of the ring gear shaft 32a, and a gear ratio p of the power distribution integration mechanism 30 according to Equation (1) given below, while calculating a torque command Tm1* of the motor MG1 from the calculated target rotation speed Nm1* and the current rotation speed Nm1 of the motor MG1 according to Equation (2) given below (step S420) :

$$Nm1* = Ne* \cdot (1+\rho)/\rho - Nm2/(Gr \cdot \rho) \qquad (1)$$

$$Tm1* = Previous\ Tm1* + k1(Nm1*-Nm1) + k2\!\int(Nm1*-Nm1)dt \quad (2)$$

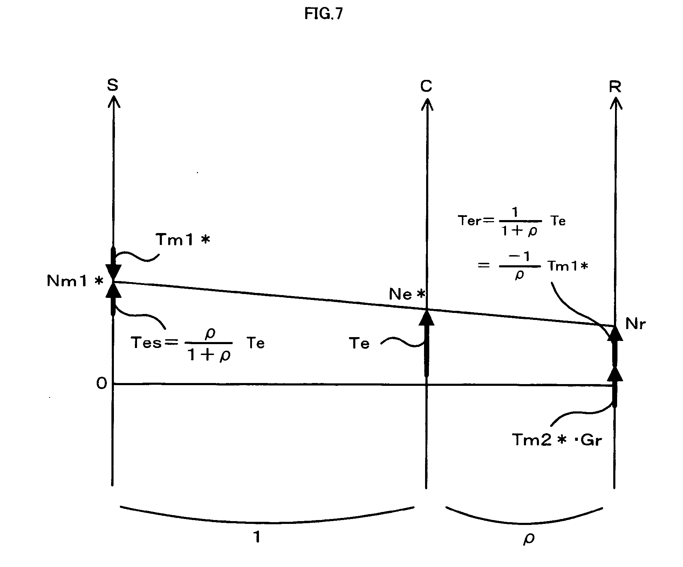

Equation (1) is a dynamic relational expression of the rotation elements included in the power distribution integration mechanism 30. Fig. 7 is an alignment chart showing torque-rotation speed dynamics of the respective rotation elements included in the power distribution integration mechanism 30. The left axis 'S' represents the rotation speed of the sun gear 31 that is equivalent to the rotation speed Nm1 of the motor MG1. The middle axis 'C' represents the rotation speed of the carrier 34 that is equivalent to the rotation speed Ne of the engine 22. The right axis 'R' represents the rotation speed Nr of the ring gear 32 (ring gear shaft 32a) obtained by dividing the rotation speed Nm2 of the motor MG2 by a gear ratio Gr of the reduction gear 35. Two upward thick arrows on the axis 'R' in Fig. 7 respectively show a torque that is directly transmitted to the ring gear shaft 32a when the torque Te is output from the engine 22 in steady operation at a specific drive point of the target rotation speed Ne* and the torque Te, and a torque that is applied to the ring gear shaft 32a via the reduction gear 35 when a torque Tm2* is output from the motor MG2. The engine 22 is not driven during the engine misfire identification in the motoring state of the engine 22. The torque Te is thus based on the friction of the engine 22 and is applied in a reverse direction. Equation (1) is readily introduced from the alignment chart of Fig. 7. Equation (2) is a relational expression of feedback control to drive and rotate the motor MG1 at the target rotation speed Nm1*. In Equation (2) given above, 'k1' in the second term and 'k2' in the third term on the right side respectively denote a gain of the proportional and a gain of the integral term.

After calculation of the target rotation speed Nm1* and the torque command Tm1* of the motor MG1, the CPU 72 calculates a lower torque restriction Tmin and an upper torque restriction Tmax as minimum and maximum torques output from the motor MG2 according to Equations (3) and (4) given below (step S430):

$$Tmin = (Win - Tm1* \cdot Nm1)\ /\ Nm2 \quad (3)$$

$$Tmax = (Wout - Tm1* \cdot Nm1)\ /\ Nm2 \quad (4)$$

The lower torque restriction Tmin and the upper torque restriction Tmax are respectively given by dividing a difference between the input limit Win of the battery 50 and power consumption (power generation) of the motor MG1, which is the product of the torque command Tm1* and the input current rotation speed Nm1 of the motor MG1, and a difference between the output limit Wout of the battery 50 and the power consumption (power generation) of the motor MG1 by the input current rotation speed Nm2 of the motor MG2. The CPU 72 then calculates a tentative motor torque Tm2tmp to be output from the motor MG2 from the torque demand Tr*, the torque command Tm1* of the motor MG1, the gear ratio p of the power distribution integration mechanism 30, and the gear ratio Gr of the reduction gear 35 according to Equation (5) given below (step S440) :

$$Tm2tmp = (Tr* + Tm1*\ /\ \rho)\ /\ Gr \quad (5)$$

The CPU 72 limits the tentative motor torque Tm2tmp to the range between the calculated lower torque restriction Tmin and upper torque restriction Tmax to set a torque command Tm2* of the motor MG2 (step S450). Setting the torque command Tm2* of the motor MG2 in this manner restricts the torque demand Tr* to be output to the ring gear shaft 32a or the driveshaft within the range between the input limit Win and the output limit Wout of the battery 50. Equation (5) is readily introduced from the alignment chart of Fig. 7.

The CPU 72 then sends the torque commands Tm1* and Tm2* of the motors MG1 and MG2 to the motor ECU 40 (step S460) and exits from this engine misfire identification drive control routine. The motor ECU 40 receives the torque commands Tm1* and Tm2* and performs switching control of the switching elements included in the respective inverters 41 and 42 to drive the motor MG1 with the torque command Tm1* and the motor MG2 with the torque command Tm2*. This drive control enables the hybrid vehicle 20 even during the engine misfire identification to be driven with the torque demand Tr* output in the range of the input limit Win and the output limit Wout of the battery 50.

The hybrid vehicle 20 of the embodiment specifies the engine misfire identification pattern based on the instruction of engine misfire identification or the state of the engine 22. The engine misfire identification of the engine 22 is thus performed in the suitable engine misfire identification pattern according to the instruction of engine misfire identification or the state of the engine 22. The hybrid vehicle 20 of the embodiment gives an instruction of engine misfire identification over the whole operation range of the engine 22 in response to the on condition of the engine misfire identification switch SWj, while giving an instruction of engine misfire identification based on the frequency of system activation Nj since the last engine misfire identification or an instruction of engine misfire identification based on the elapsed time Tj since the last engine misfire identification. The engine misfire identification is performed in the suitable engine misfire identification pattern according to the state of the engine 22. This arrangement enables the engine misfire identification across the wide operation range of the engine 22 and enhances the frequency of misfire identification of the engine 22. The hybrid vehicle 20 of the embodiment sets the reference upper rotation speed Nmax for the engine misfire identification as the upper limit of the operation range of the engine 22 according to the vehicle speed V and specifies the suitable engine misfire identification pattern in the range to the reference upper rotation speed Nmax. This arrangement ensures the engine misfire identification in the suitable operation range of the engine 22 corresponding to the vehicle speed V and thus effectively prevents the driver or any passenger on the hybrid vehicle 20 from feeling uncomfortable due to the engine misfire identification in the unsuitable operation range of the engine 22 against the vehicle speed V.

In the hybrid vehicle 20 of the embodiment, the engine misfire identification in the load operation state of the engine 22 is based on a rotation change of the crankshaft 26 when the fuel supply is sequentially cut off to one of the multiple cylinders in the operation of the engine 22 at the target rotation speed Ne*. The engine misfire identification in the motoring state of the engine 22 is based on a rotation change of the crankshaft 26 when fuel injection and ignition are performed sequentially with regard to one of the multiple cylinders in the motoring state of the engine 22 at the target rotation speed Ne*. This arrangement allows the engine misfire identification according to the state of the engine 22 and thus desirably avoids unnecessary operations of the engine 22.

The hybrid vehicle 20 of the embodiment specifies the engine misfire identification pattern according to the state of charge SOC of the battery 50, thus effectively preventing overcharge or over-discharge of the battery 50. Even during the engine misfire identification, the hybrid vehicle 20 of the embodiment is drivable with the torque demand Tr* output corresponding to the driver's depression amount of the accelerator pedal 83 in the range of the input limit Win and the output limit Wout of the battery 50.

The hybrid vehicle 20 of the embodiment sets the engine misfire identification pattern according to the state of charge SOC of the battery 50. When the state of charge SOC indicates a requirement for immediate charge of the battery 50, the hybrid vehicle 20 may give preference to charging the battery 50 and may not perform the engine misfire identification. The engine misfire identification is prohibited, for example, when the state of charge SOC of the battery 50 is lower than a preset reference charge level.

In the hybrid vehicle 20 of the embodiment, the engine misfire identification in the load operation state of the engine 22 is based on a rotation change of the crankshaft 26 when the fuel supply is sequentially cut off to one of the multiple cylinders in the operation of the engine 22 at the target rotation speed Ne*. The engine misfire identification in the motoring state of the engine 22 is based on a rotation change of the crankshaft 26 when fuel injection and ignition are performed sequentially with regard to one of the multiple cylinders in the motoring state of the engine 22 at the target rotation speed Ne*. The engine misfire identification is, however, not restricted to this technique but may be performed by any other technique.

The hybrid vehicle 20 of the embodiment gives an instruction of engine misfire identification over the whole operation range of the engine 22 in response to the on condition of the engine misfire identification switch SWj, while giving an instruction of engine misfire identification based on the frequency of system activation Nj since the last engine misfire identification or an instruction of engine misfire identification based on the elapsed time Tj since the last engine misfire identification. One possible modification may omit the instruction of engine misfire identification based on the frequency of system activation Nj since the last engine misfire identification or the instruction of engine misfire identification based on the elapsed time Tj since the last engine misfire identification. Another possible modification may additionally give an instruction of engine misfire identification based on the drive of or over a preset reference distance since the last engine misfire identification, an instruction of engine misfire identification in response to requirement for operation of the engine 22, or an instruction of engine misfire identification in response to repetition of auto stop and auto restart of the engine 22 by a preset number of times.

The hybrid vehicle 20 of the embodiment sets the reference upper rotation speed Nmax, which is the upper limit of the operation range of the engine 22 for the engine misfire identification, based on the vehicle speed V and performs the engine misfire identification in the range to the reference upper rotation speed Nmax. One possible modification may omit the specification of the operation range of the engine 22 for the engine misfire identification based on the vehicle speed V.

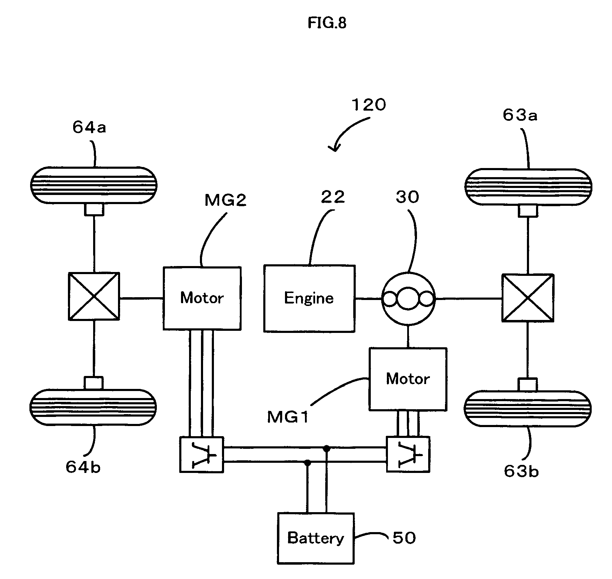

In the hybrid vehicle 20 of the embodiment, the power of the motor MG2 is subjected to gear change by the reduction gear 35 and is output to the ring gear shaft 32a. In one possible modification shown as a hybrid vehicle 120 of Fig. 8, the power of the motor MG2 may be output to another axle (that is, an axle linked with wheels 64a and 64b), which is different from an axle connected with the ring gear shaft 32a (that is, an axle linked with the wheels 63a and 63b).

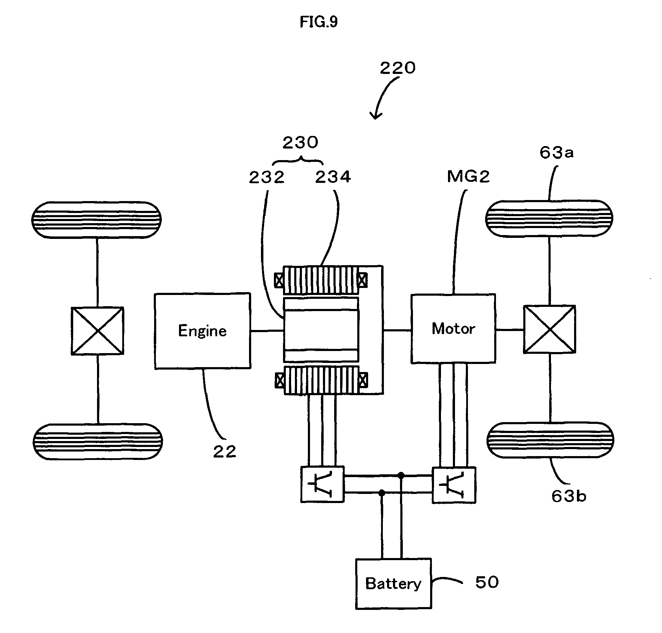

In the hybrid vehicle 20 of the embodiment, the power of the engine 22 is output via the power distribution integration mechanism 30 to the ring gear shaft 32a functioning as the drive shaft linked with the drive wheels 63a and 63b. In another possible modification of Fig. 9, a hybrid vehicle 220 may have a pair-rotor motor 230, which has an inner rotor 232 connected with the crankshaft 26 of the engine 22 and an outer rotor 234 connected with the drive shaft for outputting the power to the drive wheels 63a, 63b and transmits part of the power output from the engine 22 to the drive shaft while converting the residual part of the power into electric power.

The technique of the invention is applicable to identify a misfire in an engine mounted on a hybrid vehicle of any other configuration, which is different from any of the hybrid vehicle 20 of the embodiment and the hybrid vehicles 120 and 220 of the modified examples.

The embodiment discussed above is to be considered in all aspects as illustrative and not restrictive. In response to the on condition of an engine misfire identification switch SWj (step S110: No), the engine misfire identification device of the invention sets a maintenance-based engine misfire identification pattern and performs engine misfire identification across the whole operable range of an engine (step S120). When a frequency of system activation Nj since a last engine misfire identification is greater than a preset reference number Nref or when an elapsed time Tj since the last engine misfire identification is longer than a preset reference time Tref (step S130: Yes), the engine misfire identification device specifies a suitable engine misfire identification pattern based on the operating state of the engine and the state of charge SOC of a battery. The hybrid vehicle adopts a load-operation-state engine misfire identification pattern to identify a misfire in a load operation state of the engine in a range to a reference upper rotation speed Nmax, which is set according to the vehicle speed V (step S170), while adopting a motoring-state engine misfire identification pattern to identify a misfire in a motoring state of the engine in a range to the reference upper rotation speed Nmax, which is set according to the vehicle speed V (step S200). This arrangement of the invention desirably enhances the frequency of engine misfire identification and ensures the engine misfire identification in a wide operation range of the engine.

## Claims

1.  An engine misfire identification device to identify a misfire in an internal combustion engine (22) mounted on a hybrid vehicle (20), said hybrid vehicle comprising:

    the internal combustion engine (22);
    a first motor (MG1) that is used for motoring the internal combustion engine and for power generation with output power of the internal combustion engine;
    a second motor (MG2) that has power output capability of outputting a driving power, and
    and accumulator unit (50) that receives and transmits electric power from and to the first motor (MG1) and the second motor (MG2),
    said engine misfire identification device comprising:

    a state detection module (S140) that detects at least one of a motoring or a load operation state of said engine (22);
    an engine misfire identification pattern specification module (S160, S170, S190, S200) that, when an instruction of engine misfire identification is given, specifies an executable engine misfire identification pattern based on the instruction of engine misfire identification and the detected state of said engine (22); and
    an engine misfire identification module (S300) that performs engine misfire identification of the internal combustion engine (22) according to the specified engine misfire identification pattern.

2.  An engine misfire identification device in accordance with claim 1, wherein the instruction of engine misfire identification includes multiple different instructions of engine misfire identification caused by multiple different factors (S100), and
    said engine misfire identification pattern specification module specifies the engine misfire identification pattern based on a factor causing one of the multiple instructions of engine misfire identification.

3.  An engine misfire identification device in accordance with claim 2, wherein the multiple different instructions of engine misfire identification (S100) include at least one of an instruction caused by elapse of at least a preset time period since a last engine misfire identification (S130), an instruction caused by a drive of at least a preset distance since the last engine misfire identification (S130), an instruction caused by system activation of said hybrid vehicle (S110), an instruction caused by requirement for operation of the internal combustion engine, and an instruction caused by an operator's preset engine misfire identification operation.

4.  An engine misfire identification device in accordance with claim 1, wherein said state detection module (S150, S180) detects a charge-requirement state that requires charging the accumulator unit, and
in response to detection of the charge-requirement state of the accumulator unit by said state detection module, said engine misfire identification pattern specification module sets an engine misfire identification pattern in a specific range with preference to charging the accumulator unit.

5. An engine misfire identification device in accordance with claim 1, wherein said state detection module measures a vehicle speed of said hybrid vehicle, and
said engine misfire identification pattern specification module sets an operation range of the internal combustion engine according to the measured vehicle speed and specifies the engine misfire identification pattern in the set operation range.

6. An engine misfire identification device in accordance with claim 1, wherein said state detection module detects the at least one of a motoring or a load operation state of the internal combustion engine (22), and
in response to detection of a load operation state of the internal combustion engine by said state detection module, said engine misfire identification pattern specification module sets an engine misfire identification pattern with stop of fuel supply to one of multiple cylinders in the internal combustion engine (22),
in response to detection of a motoring state of the internal combustion engine with no fuel supply, said engine misfire identification pattern specification module setting an engine misfire identification pattern with fuel supply to and ignition in one of the multiple cylinders in the internal combustion engine (22).

7. An engine misfire detection device in a hybrid vehicle in accordance with any one of claims 1 to 6, said hybrid vehicle further comprising:

a three shaft-type power input output module that is linked to three shafts, an output shaft of the internal combustion engine, a driveshaft linked with an axle of said hybrid vehicle, and a rotating shaft of the first motor, and inputs and outputs power from and to a residual one shaft based on powers input from and output to any two shafts among the three shafts.

8. An engine misfire identification method of identifying a misfire in an internal combustion engine mounted on a hybrid vehicle, said hybrid vehicle comprising:

the internal combustion engine;
a first motor that is used for motoring the internal combustion engine and for power generation with output power of the internal combustion engine;
a second motor that has power output capability of outputting a driving power, and an accumulator unit that receives and transmits electric power from and to the first motor and the second motor,
said engine misfire identification method comprising the steps of:

when an instruction of engine misfire identification is given, specifying an executable engine misfire identification pattern based on the instruction of engine misfire identification and at least one of a motoring or a load operation state of said engine; and
performing engine misfire identification of the internal combustion engine according to the specified engine misfire identification pattern.

**Patentansprüche**

1. Brennkraftmaschinenfehlzündungserkennungsvorrichtung zum Erkennen einer Fehlzündung in einer auf einem Hybridfahrzeug (20) montierten Brennkraftmaschine (22), wobei das Hybridfahrzeug Folgendes aufweist:

die Brennkraftmaschine (22);
einen ersten Motor (MG1), der zum Anlassen der Brennkraftmaschine und zur Stromerzeugung durch eine Abgabeleistung der Brennkraftmaschine verwendet wird;
einen zweiten Motor (MG2), der eine Leistungsabgabefähigkeit zum Abgeben einer Antriebsleistung aufweist, und
eine Akkumulatoreinheit (50), die elektrischen Strom von dem ersten Motor (MG1) und dem zweiten Motor (MG2) empfängt und elektrischen Strom an diese überträgt,
wobei die

Brennkraftmaschinenfehlzündungserkennungsvorrichtung Folgendes aufweist:

ein Zustanderfassungsmodul (S140), das wenigstens einen von einem Anlass- oder einem Lastbetriebszustand der Brennkraftmaschine (22) erfasst;

ein Brennkraftmaschinenfehlzündungserkennungsmuster-Spezifizierungsmodul (S160, S170, S190, S200), das dann, wenn eine Anweisung zur Brennkraftmaschinenfehlzündungserkennung gegeben wird, ein ausführbares Brennkraftmaschinenfehlzündungserkennungsmuster basierend auf der Anweisung der Brennkraftmaschinenfehlzündungserkennung und dem erfassten Zustand der Brennkraftmaschine (22) spezifiziert; und

ein Brennkraftmaschinenfehlzündungserkennungsmodul (S300), das eine Brennkraftmaschinenfehlzündungserkennung der Brennkraftmaschine (22) gemäß dem spezifizierten Brennkraftmaschinenfehlzündungserkennungsmuster durchführt.

2. Brennkraftmaschinenfehlzündungserkennungsvorrichtung nach Anspruch 1, wobei die Anweisung zur Brennkraftmaschinenfehlzündungserkennung mehrere verschiedene Anweisungen zur Brennkraftmaschinenfehlzündungserkennung aufweist, die durch mehrere verschiedene Faktoren (S100) hervorgerufen werden, und das Brennkraftmaschinenfehlzündungserkennungsmuster-Spezifizierungsmodul das Brennkraftmaschinenfehlzündungserkennungsmuster basierend auf einem Faktor spezifiziert, der eine der mehreren Anweisungen zur Brennkraftmaschinenfehlzündungserkennung hervorruft.

3. Brennkraftmaschinenfehlzündungserkennungsvorrichtung nach Anspruch 2, wobei die mehreren verschiedenen Anweisungen zur Brennkraftmaschinenfehlzündungserkennung (S100) wenigstens eine von einer Anweisung, die durch Verstreichen wenigstens einer vorgegebenen Zeitdauer seit der letzten Brennkraftmaschinenfehlzündungserkennung (S130) hervorgerufen wird, einer Anweisung, die durch eine Fahrt von wenigstens einer vorgegebenen Distanz seit der letzten Brennkraftmaschinenfehlzündungserkennung (S130) hervorgerufen wird, einer Anweisung, die durch eine Systemaktivierung des Hybridfahrzeugs (S110) hervorgerufen wird, einer Anweisung, die durch eine Betriebsanforderung der Brennkraftmaschine hervorgerufen wird, und einer Anweisung aufweist, die durch einen vorgegebenen Brennkraftmaschinenfehlzündungserkennungsbetrieb eines Anwenders hervorgerufen wird.

4. Brennkraftmaschinenfehlzündungserkennungsvorrichtung nach Anspruch 1, wobei das Zustandserfassungsmodul (S150, S180) einen Ladebedarfszustand erfasst, der ein Laden der Akkumulatoreinheit anfordert, und das Brennkraftmaschinenfehlzündungserkennungsmuster-Spezifizierungsmodul ein Brennkraftmaschinenfehlzündungserkennungsmuster in Erwiderung auf eine Erfassung des Ladebedarfszustands der Akkumulatoreinheit durch das Zustandserfassungsmodul auf einen bestimmten Bereich festsetzt, wobei ein Laden der Akkumulatoreinheit Vorrang hat.

5. Brennkraftmaschinenfehlzündungserkennungsvorrichtung nach Anspruch 1, wobei das Zustandserfassungsmodul eine Fahrzeuggeschwindigkeit des Hybridfahrzeugs misst, und das Brennkraftmaschinenfehlzündungserkennungsmuster-Spezifizierungsmodul einen Betriebsbereich der Brennkraftmaschine gemäß der gemessenen Fahrzeuggeschwindigkeit festsetzt und das Brennkraftmaschinenfehlzündungserkennungsmuster in dem festgesetzten Betriebsbereich spezifiziert.

6. Brennkraftmaschinenfehlzündungserkennungsvorrichtung nach Anspruch 1, wobei das Zustandserfassungsmodul den wenigstens einen von einem Anlass- oder einem Lastbetriebszustand der Brennkraftmaschine (22) erfasst, und das Brennkraftmaschinenfehlzündungserkennungsmuster-Spezifizierungsmodul in Erwiderung auf eine Erfassung eines Lastbetriebszustands der Brennkraftmaschine durch das Zustandserfassungsmodul ein Brennkraftmaschinenfehlzündungserkennungsmuster mit einem Anhalten einer Kraftstoffzufuhr zu einem der mehreren Zylinder in der Brennkraftmaschine (22) festsetzt, das Brennkraftmaschinenfehlzündungserkennungsmuster-Spezifizierungsmodul, in Erwiderung auf eine Erfassung eines Anlasszustands der Brennkraftmaschine ohne Kraftstoffzufuhr, ein Brennkraftmaschinenfehlzündungserkennungsmuster mit Kraftstoffzufuhr zu einem von den mehrfachen Zylindern in der Brennkraftmaschine (22) und Zündung in diesem festsetzt.

7. Brennkraftmaschinenfehlzündungserfassungsvorrichtung in einem Hybridfahrzeug nach einem der Ansprüche 1 bis 6, wobei das Hybridfahrzeug des Weiteren Folgendes aufweist:

ein Drei-Wellen-Leistungseingabe-Ausgabe-Modul, das mit drei Wellen verbunden ist, nämlich einer Abtriebswelle der Brennkraftmaschine, einer Antriebswelle, die mit einer Achse des Hybridfahrzeugs verbunden ist, und eine Drehwelle des ersten Motors, und das basierend auf Leistungen, die von und an beliebigen zwei Wellen unter den drei Wellen ein- und ausgegeben werden, eine Leistung von und an eine verbleibende Welle ein- und ausgibt.

**8.** Brennkraftmaschinenfehlzündungserkennungsverfahren zum Erkennen einer Fehlzündung in einer auf einem Hybridfahrzeug montierten Brennkraftmaschine, wobei das Hybridfahrzeug Folgendes aufweist:

die Brennkraftmaschine;
einen ersten Motor, der zum Anlassen der Brennkraftmaschine und zur Stromerzeugung durch eine Abgabeleistung der Brennkraftmaschine verwendet wird;
einen zweiten Motor, der eine Leistungsabgabefähigkeit zum Abgeben einer Antriebsleistung aufweist, und eine Akkumulatoreinheit, die elektrischen Strom von dem ersten Motor und dem zweiten Motor empfängt und elektrischen Strom an diese überträgt,
wobei das Brennkraftmaschinenfehlzündungserkennungsverfahren die folgenden Schritte aufweist:

wenn eine Anweisung der Brennkraftmaschinenfehlzündungserkennung gegeben ist, Spezifizieren eines ausführbaren Brennkraftmaschinenfehlzündungserkennungsmusters basierend auf der Anweisung zur Brennkraftmaschinenfehlzündungserkennung und wenigstens einem von einem Anlass- oder einem Lastbetriebszustand der Brennkraftmaschine; und
Durchführen einer Brennkraftmaschinenfehlzündungserkennung der Brennkraftmaschine gemäß dem spezifizierten Brennkraftmaschinenfehlzündungserkennungsmuster.

**Revendications**

**1.** Dispositif d'identification de raté d'allumage d'un moteur pour identifier un raté d'allumage dans un moteur à combustion interne (22) monté sur un véhicule hybride (20), ledit véhicule hybride comprenant:

le moteur à combustion interne (22);
un premier moteur-générateur (MG1) qui est utilisé pour propulser le moteur à combustion interne et pour générer de la puissance avec une puissance de sortie du moteur à combustion interne;
un deuxième moteur-générateur (MG2) qui a une aptitude à délivrer de la puissance pour faire sortir une puissance d'entraînement, et
une unité d'accumulateur (50) qui reçoit et transmet une puissance électrique du et au premier moteur-générateur (MG1) et au deuxième moteur-générateur (MG2),
ledit dispositif d'identification de ratés d'allumage d'un moteur comprenant:

un module de détection d'état (S140) qui détecte au moins l'un d'une propulsion ou d'un état de fonctionnement en charge dudit moteur (22);
un module de spécification d'un modèle d'identification de raté d'allumage de moteur (S160, S170, S190, S200) qui, lorsqu'une instruction d'identification de raté d'allumage de moteur est donnée, spécifie un modèle d'identification de raté d'allumage de moteur exécutable sur la base de l'instruction d'identification de raté d'allumage de moteur et de l'état détecté dudit moteur (22); et
un module d'identification de raté d'allumage de moteur (S300) qui effectue une identification de raté d'allumage d'un moteur du moteur à combustion interne (22) selon le modèle d'identification de raté d'allumage de moteur spécifié.

**2.** Dispositif d'identification de raté d'allumage d'un moteur selon la revendication 1, dans lequel l'instruction d'identification de raté d'allumage de moteur inclut plusieurs instructions différentes d'identification de raté d'allumage de moteur induites par plusieurs facteurs différents (S100), et
ledit module de spécification d'un modèle d'identification de raté d'allumage de moteur spécifie le modèle d'identification de raté d'allumage de moteur sur la base d'un facteur provoquant l'une des instructions multiples d'identification de raté d'allumage de moteur.

**3.** Dispositif d'identification de raté d'allumage d'un moteur selon la revendication 2, dans lequel la pluralités d'instructions différentes d'identification de raté d'allumage de moteur (S100) incluent au moins l'une d'une instruction induite par le passage d'au moins une durée de temps préétablie depuis une dernière identification de raté d'allumage de moteur (S130), d'une instruction induite par un déplacement sur au moins une distance préétablie depuis la dernière identification de raté d'allumage de moteur (S130), d'une instruction induite par une activation de système dudit véhicule hybride (S110), d'une instruction induite par une exigence pour un fonctionnement du moteur à combustion interne, et d'une instruction induite par une opération d'identification de raté d'allumage de moteur préétablie par un opérateur.

4. Dispositif d'identification de raté d'allumage d'un moteur selon la revendication 1, dans lequel ledit module de détection d'état (S150, S180) détecte un état d'exigence de charge qui demande un chargement de l'unité d'accumulateur, et
en réponse à la détection de l'état d'exigence de charge de l'unité d'accumulateur par ledit module de détection d'état, ledit module de spécification de modèle d'identification de raté d'allumage de moteur établit un modèle d'identification de raté d'allumage de moteur dans une gamme spécifique avec une préférence pour le chargement de l'unité d'accumulateur.

5. Dispositif d'identification de raté d'allumage d'un moteur selon la revendication 1, dans lequel ledit module de détection d'état mesure une vitesse du véhicule dudit véhicule hybride, et
ledit module de spécification d'un modèle d'identification de raté d'allumage de moteur établit une gamme de fonctionnement du moteur à combustion interne selon la vitesse du véhicule mesurée et spécifie le modèle d'identification de raté d'allumage de moteur dans la gamme de fonctionnement établie.

6. Dispositif d'identification de raté d'allumage d'un moteur selon la revendication 1, dans lequel ledit module de détection d'état détecte le au moins l'un d'un état de propulsion ou d'un état de fonctionnement en charge du moteur à combustion interne (22), et
en réponse à la détection d'un état de fonctionnement en charge du moteur à combustion interne par ledit module de détection d'état, ledit module de spécification d'un modèle d'identification de raté d'allumage de moteur établit un modèle d'identification de raté de moteur avec l'interruption d'alimentation en carburant à l'un de plusieurs cylindres dans le moteur à combustion interne (22),
en réponse à la détection d'un état propulsion du moteur à combustion interne sans alimentation en carburant, ledit module de spécification d'un modèle d'identification de raté d'allumage de moteur établissant un modèle d'identification de raté d'allumage de moteur avec une alimentation en carburant à et un allumage dans l'un des plusieurs cylindres dans le moteur à combustion interne (22).

7. Dispositif de détection de raté d'allumage d'un moteur dans un véhicule hybride selon l'une quelconque des revendications 1 à 6, ledit véhicule hybride comprenant en plus:

un module d'entrée/sortie de puissance du type à trois arbres qui est lié à trois arbres, un arbre de sortie du moteur à combustion interne, un arbre d'entraînement lié à un essieu dudit véhicule hybride, et un arbre rotatif du premier moteur-générateur, et fait entrer et sortir une puissance de et à un arbre résiduel sur la base de puissances entrées de et sorties à deux quelconques parmi les trois arbres.

8. Procédé d'identification de raté d'allumage d'un moteur pour identifier un raté d'allumage dans un moteur à combustion interne monté sur un véhicule hybride, ledit véhicule hybride comprenant:

le moteur à combustion interne;
un premier moteur-générateur qui est utilisé pour propulser le moteur à combustion interne et pour une génération de puissance avec une puissance de sortie du moteur à combustion interne;
un deuxième moteur-générateur qui a une aptitude à délivrer de la puissance pour sortir une puissance d'entraînement, et une unité d'accumulateur qui reçoit et transmet une puissance électrique de et au premier moteur-générateur et au deuxième moteur-générateur,
ledit procédé d'identification de raté d'allumage d'un moteur comprenant les étapes de:

lorsqu'une instruction d'identification de raté d'allumage de moteur est donnée, spécifier un modèle d'identification de raté d'allumage de moteur exécutable sur la base de l'instruction d'identification de raté d'allumage de moteur et d'au moins l'un d'un état de propulsion d'un état de fonctionnement en charge dudit moteur; et
effectuer une identification de raté d'allumage de moteur du moteur à combustion interne selon le modèle d'identification de raté d'allumage de moteur spécifié.

FIG.1

FIG.2

**FIG.3**

Engine Misfire Identification Instruction Routine

Input Frequency of System Activation Nj and Elapsed Time Tj since Last Engine Misfire Identification, On-Off Condition of Engine Misfire Identification Switch SWj, State of Engine, Vehicle Speed V, and State of Charge SOC of Battery — S100

SWj=OFF? — S110
NO → S120
YES

Give Instruction of Engine Misfire Identification over Whole Operable Range of Engine

Nj>Nref or Tj>Tref? — S130
NO
YES

S140 Identify State of Engine
Stop → Motoring
S150
Load Operation

SOC < Shi? 
NO
YES — S160

SOC ≥ Slow? — S180
NO
YES — S190

Set Reference Upper Rotation Speed Nmx
Nmax=f1(V)

Set Reference Upper Rotation Speed Nmax
Nmax=f2(V)

S170
Give instruction of Engine Misfire Identification in Range to Reference Upper Rotation Speed Nmax in Load Operation State of Engine Motoring

Give Instruction of Engine Misfire Identification in Range to Reference Upper Rotation Speed Nmax in Motoring State of Engine — S200

STOP

**FIG.4**

Engine Misfire Identification Routine

Set Target Roataion Speed Ne* of Engine
Specify Load Operation or Non-Load Operation of Engine — S300

S310 — Engine is in Load Operation?
NO → S330
YES

S320 — Engine Misfire Identification in Load Operation State of Engine

Engine Misfire Identification in Motoring State of Engine

STOP

FIG.5

```
        ┌─────────────────────┐
        │   Engine Misfire     │
        │ Identification Drive │
        │   Control Routine    │
        └─────────────────────┘
```

| | |
|---|---|
| Input Accelerator Opening Acc, Vehicle Speed V, Motor Rotation Speeds Nm1 and Nm2, Engine Target Rotation Speed Ne*, and Input and Output Limits Win and Wout of Battery | S400 |
| Set Torque Demand Tr* $Tr*=fe(Acc,V)$ | S410 |
| Calculate Target Rotation Speed Nm1* and Torque Command Tm1* of Motor MG1 $Nm1*=fm1(Ne*, Nm2/Gr)$ $Tm1*=PreviousTm1*+PID(Nm1,Nm1*)$ | S420 |
| Calculate Upper Torque Restriction Tmax and Lower Torque Restriction Tmin $Tmin=(Win-Tm1*\cdot Nm1)/Nm2$ $Tmax=(Wout-Tm1*\cdot Nm1)/Nm2$ | S430 |
| Calculate Tentative Motor Torque Tm2tmp $Tm2tmp=(Tr*+Tm1*/\rho)/Gr$ | S440 |
| Set Torque Command Tm2* of Motor MG2 $Tm2*=max(min(Tm2tmp,Tmax),Tmin)$ | S450 |
| Send Torque Commands Tm1* and Tm2* of Motors MG1 and MG2 to Motor ECU | S460 |

```
        ┌─────────┐
        │   RET   │
        └─────────┘
```

FIG.6

FIG.7

$Tm1*$

$Nm1*$

$Ne*$

$Nr$

$Ter = \dfrac{1}{1+\rho} \; Te$

$= \dfrac{-1}{\rho} \; Tm1*$

$Tes = \dfrac{\rho}{1+\rho} \; Te$

$Te$

$Tm2* \cdot Gr$

$1$

$\rho$

FIG.8

FIG.9

**EP 1 750 111 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000248989 A
- JP 2001271695 A
- JP 2001268711 A
- JP 2001041097 A